# EUROPEAN PATENT APPLICATION

(11) **EP 4 648 044 A1**
(43) Date of publication of application: **12.11.2025**
(21) Application number: 23914526.1
(22) Date of filing: 22.12.2023
(51) Int. Cl.: G10L 15/26

(54) **SPEECH RECOGNITION METHOD AND APPARATUS, AND ELECTRONIC DEVICE**

(30) Priority: 06.01.2023 CN 202310016938
(71) Applicant: Alibaba Innovation Private Limited, Singapore 189554 (SG)
(72) Inventor: DU, Zhihao, Beijing 100102 (CN); ZHANG, Shiliang, Hangzhou, Zhejiang 310030 (CN); LIN, Yuxiao, Hangzhou, Zhejiang 310030 (CN)
(74) Representative: Barker Brettell LLP
(86) International application number: PCT/CN2023/141045
(87) International publication number: WO 2024/146393

(57) **Abstract**

A speech recognition method and apparatus, and an electronic device. The speech recognition method includes: acquiring (S302) speech representation vectors and speaker representation vectors corresponding to to-be-recognized speech frame data; performing (S304) parallel speech frame text activation value prediction on the speech representation vectors, and when prediction results indicate that speech frame text activation values reach a firing threshold, generating a firing vector according to speech representation vectors within a range of the firing threshold; determining (S306) a corresponding text for the firing vector and a speaker corresponding to the text according to the firing vector and the speaker representation vectors. The accuracy of speech recognition and speaker marking is improved.

## Description

The present application claims priority to Chinese patent application No. 202310016938.1, filed to China National Intellectual Property Administration on January 6, 2023 and entitled "SPEECH RECOGNITION METHOD AND APPARATUS, AND ELECTRONIC DEVICE", which is hereby incorporated by reference in its entirety.

### TECHNICAL FIELD

Embodiments of the present application relate to the field of artificial intelligence technologies and, in particular, to a speech recognition method and apparatus, and an electronic device.

### BACKGROUND

Speech recognition is a technology that allows machines to convert speech signals into corresponding text through recognition and understanding processes. With the development of speech recognition technology, the speech recognition technology is applied in various scenarios such as a conference scenario, an intelligent customer service scenario, an online medical scenario, and so on.

For most speech recognition tasks, targeted speech at least includes a voice of one speaker, and more often includes voices of multiple speakers. A current speech recognition task will convert speech into different text corresponding to different speakers through a system cascade of two sub-tasks, namely, a speech recognition sub-task and a speaker log sub-task. These two sub-tasks are implemented respectively through corresponding two separate machine learning models, and are optimized for use respectively. However, since interaction of task information between models is limited, and it is required to perform corresponding optimization and processing separately and then to perform cascaded use, it is resulted in that this method has low efficiency and insufficient accuracy of speech recognition.

### SUMMARY

In view of this, embodiments of the present application provide speech recognition solutions to solve, at least partially, the above problems.

According to a first aspect of the embodiments of the present application, there is provided a speech recognition method, including: acquiring speech representation vectors and speaker representation vectors corresponding to to-be-recognized speech frame data; performing parallel speech frame text activation value prediction on the speech representation vectors, and when prediction results indicate that speech frame text activation values reach a firing threshold, generating a firing vector according to speech representation vectors within a range of the firing threshold; determining a corresponding text for the firing vector and a speaker corresponding to the text according to the firing vector and the speaker representation vectors.

According to a second aspect of the embodiments of the present application, there is provided a speech recognition apparatus, including: a speech recognition branch unit and a speaker recognition branch unit, where the speech recognition branch unit includes: a speech recognition encoder, a continuous integrate-and-fire module and a speech recognition decoder; the speaker recognition branch unit includes: a speaker encoder and a speaker decoder; the speech recognition encoder is configured to perform speech feature extraction on an acoustic feature corresponding to to-be-recognized speech frame data to obtain corresponding speech representation vectors; the continuous integrate-and-fire module is configured to: perform parallel speech frame text activation value prediction on the speech representation vectors, and when prediction results indicate that speech frame text activation values reach a firing threshold, generate a firing vector according to speech representation vectors within a range of the firing threshold and transmit the firing vector to the speaker decoder; the speaker encoder is configured to perform speaker feature extraction on the acoustic feature corresponding to the to-be-recognized speech frame data to obtain corresponding speaker representation vectors; the speaker decoder is configured to receive the firing vector and determine a speaker corresponding to the firing vector according to the firing vector and the speaker representation vectors; the speech recognition decoder is configured to convert the firing vector into a text and determine a speaker corresponding to the text according to information of the speaker corresponding to the firing vector.

According to a third aspect of the embodiments of the present application, there is provided an electronic device, including: a processor, a memory, a communication interface, and a communication bus, where the processor, the memory, and the communication interface communicate with each other through the communication bus; the memory is configured to store at least one executable instruction, and the executable instruction causes the processor to perform operations corresponding to the method according to the first aspect.

According to a fourth aspect of the embodiments of the present application, there is provided a computer storage medium, having a computer program stored thereon, and when the program is executed by a processor, the method according to the first aspect is implemented.

According to the solutions provided in the embodiments of the present application, in a scenario where speech recognition and marking of corresponding speakers are required, on the one hand, the firing vector will be generated based on the speech representation vectors of a speech recognition task, and combined with the speaker representation vectors of a speaker recognition task. In this way, task information interaction between the two in a feature generation stage is achieved, so that when performing speaker recognition on speech, a speech feature and a speaker feature are effectively fused, thereby improving the accuracy of speech recognition and speaker marking. On the other hand, in the solutions of the embodiments of the present application, the prediction of speech frame text activation values is parallel, that is, the speech representation vectors of multiple speech frames can be predicted simultaneously, and the firing vector can be generated when the firing threshold is reached. Compared with a traditional manner in which context speech frames of a character corresponding to each speech frame need to be processed when processing the each speech frame, the processing speed and efficiency can be greatly improved. It can be seen that through the embodiments of the present application, the interaction complexity between the speech recognition task and the speaker recognition task is reduced, and the overall recognition efficiency is improved.

### BRIEF DESCRIPTION OF THE DRAWINGS

In order to describe the technical solutions in the embodiments of the present application or in the prior art more clearly, the accompanying drawings that need to be used in the description of the embodiments or the prior art will be briefly introduced below. It is obvious that the accompanying drawings described below are only some of the embodiments recorded in the embodiments of the present application, and for those of ordinary skill in the art, other drawings may also be obtained according to these drawings.
FIG. 1 is a schematic diagram of an exemplary system to which solutions of embodiments of the present application are applicable.
FIG. 2A is a structural block diagram of a speech recognition apparatus according to Embodiment I of the present application.
FIG. 2B is a schematic structural diagram of a model corresponding to a speech recognition apparatus in the embodiment shown in FIG. 2A.
FIG. 3A is a flowchart of steps of a speech recognition method according to Embodiment II of the present application.
FIG. 3B is a diagram of an example scenario in the embodiment shown in FIG. 3A.
FIG. 4 is a schematic structural diagram of an electronic device according to Embodiment III of the present application.

### DESCRIPTION OF EMBODIMENTS

In order to enable persons skilled in the art better understand the technical solutions in the embodiments of the present application, the technical solutions in the embodiments of the present application will be described clearly and comprehensively in conjunction with accompanying drawings in the embodiments of the present application. Obviously, the described embodiments are part of the embodiments of the present application, but not all of the embodiments. Based on the embodiments in the embodiments of the present application, all other embodiments obtained by those of ordinary skill in the art shall belong to the protection scope of the present application.

Specific implementations of the embodiments of the present application will be further described below with reference to the accompanying drawings of the embodiments of the present application.

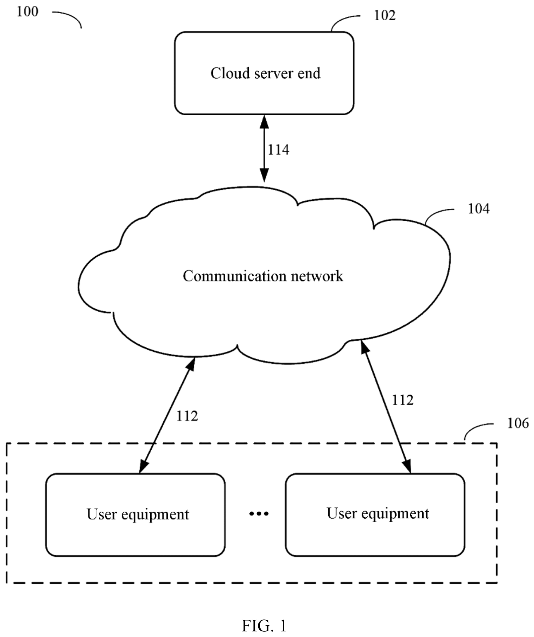

FIG. 1 shows an exemplary system to which embodiments of the present application are applicable. As shown in FIG. 1, a system 100 may include a cloud server end 102, a communication network 104, and/or one or more user equipments 106. In an example in FIG. 1, there are a plurality of user equipments.

The cloud server end 102 may be any suitable device for storing information, data, programs, and/or any other suitable type of content, including but not limited to, a distributed storage system device, a server cluster, a computing cloud server cluster, etc. In some embodiments, the cloud server end 102 may perform any suitable function. For example, in some embodiments, the cloud server end 102 may be used for speech recognition and speaker marking. As an optional example, in some embodiments, the cloud server end 102 may be configured to perform speech recognition and speaker marking based on the interaction between a speech recognition task and a speaker recognition task. In some embodiments, the cloud server end 102 may perform parallel speech frame text activation value prediction on speech representation vectors corresponding to to-be-recognized speech frame data, and when prediction results indicate that speech frame text activation values reach a firing threshold, generate a firing vector according to speech representation vectors within a range of the firing threshold. Further, by using the firing vector and speaker representation vectors corresponding to the to-be-recognized speech frame data, the interaction between the speech recognition task and the speaker recognition task is achieved, and finally a corresponding text for the firing vector and a speaker corresponding to the text are determined. As another example, in some embodiments, the cloud server end 102 may be configured to acquire the to-be-recognized speech frame data through the user equipment 106, and after obtaining the text corresponding to the firing vector and the speaker corresponding to the text through the above process, send them to the user equipment 106.

In some embodiments, the communication network 104 may be any suitable combination of one or more wired and/or wireless networks. For example, the communication network 104 may include any one or more of the following: the Internet, an Intranet, a wide area network (Wide Area Network, WAN), a local area network (Local Area Network, LAN), a wireless network, a digital subscriber line (Digital Subscriber Line, DSL) network, a frame relay network, an asynchronous transfer mode (Asynchronous Transfer Mode, ATM) network, a virtual private network (Virtual Private Network, VPN) and/or any other suitable communication network. The user equipment 106 may be connected to the communication network 104 via one or more communication links (e.g., communication link 112), and the communication network 104 may be linked to the cloud server end 102 via one or more communication links (e.g., communication link 114). The communication link may be any communication link suitable for transmitting data between the user equipment 106 and the cloud server end 102, such as a network link, a dial-up link, a wireless link, a hardwired link, any other suitable communication link, or any suitable combination of such links.

The user equipment 106 may include any one or more user equipments suitable for speech interaction with users. In some embodiments, the user equipment 106 may send a speech recognition request and requested speech frame data to the cloud server end 102, and receive results of speech recognition and speaker marking that are fed back from the cloud server end 102, such as the aforementioned text corresponding to the firing vector and the speaker corresponding to the text, etc. In some embodiments, the user equipment 106 may include any suitable type of devices. For example, in some embodiments, the user equipment 106 may include a mobile device, a tablet computer, a laptop computer, a desktop computer, a wearable computer, a game console, a media player, a vehicle entertainment system, and/or any other suitable type of user equipment.

Based on the above system, the solutions of the present application will be described through a plurality of embodiments.

To facilitate understanding of the solutions of the embodiments of the present application, a speech recognition model and its corresponding model structure used in the embodiments of the present application are described first below.

### Embodiment I

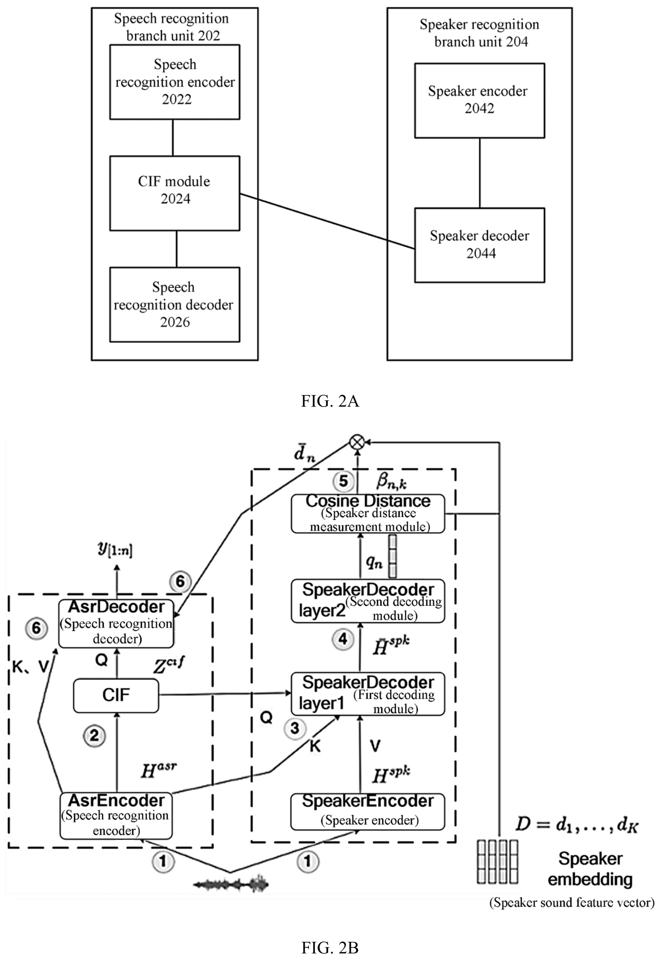

Referring to FIG. 2A, a structural block diagram of a speech recognition apparatus according to Embodiment I of the present application is shown.

The speech recognition apparatus includes: a speech recognition branch unit 202 and a speaker recognition branch unit 204. The speech recognition branch unit 202 includes: a speech recognition encoder 2022, a continuous integrate-and-fire (Continuous Integrate-and-Fire, CIF) module 2024 and a speech recognition decoder 2026. The speaker recognition branch unit 204 includes: a speaker encoder 2042 and a speaker decoder 2044.

The speech recognition branch unit 202 may be used for speech recognition, and the speaker recognition branch unit 204 may be used for speaker recognition, but these two branch units interact with each other during task processing, so that final speech recognition and speaker marking results are more accurate.

The speech recognition encoder 2022 is configured to perform speech feature extraction on an acoustic feature corresponding to to-be-recognized speech frame data to obtain corresponding speech representation vectors. The to-be-recognized speech frame data may be any appropriate audio frame data corresponding to speech with a certain duration, and this speech segment has speech of at least one speaker, or may have speech of multiple speakers. The speech segment usually includes multiple frames. It should be noted that unless otherwise specified, in the embodiments of the present application, "multiple", "a plurality of" and other quantities related to "many" refer to two or more. The acoustic feature refers to a physical quantity representing acoustic characteristics of speech, and is a general term for acoustic performance of sound elements, for example, an energy concentration zone, a formant frequency, a formant intensity and a bandwidth for representing a timbre, and a duration, a fundamental frequency and an average speech power for representing prosodic characteristics of speech. Acoustic feature extraction based on the speech frame data may be implemented by those skilled in the art in any suitable manner, including but not limited to, the Mel-frequency cepstral coefficient MFCC method, etc., which is not limited in the embodiments of the present application. In addition, although theoretically, the duration of speech may be not limited, that is, the speech frame data may have any number of frames, for ease of processing, 3-5 seconds or slightly longer may be generally taken each time, such as speech frame data corresponding to 5-10 seconds of speech. Further, the speech recognition encoder 2022 may perform, by means of encoding, speech feature extraction based on the acoustic feature to obtain the corresponding speech representation vectors.

On this basis, the CIF module 2024 performs parallel speech frame text activation value prediction on the speech representation vectors, and when prediction results indicate that speech frame text activation values reach a firing threshold, generates a firing vector according to speech representation vectors within a range of the firing threshold and transmits the firing vector to the speaker decoder 2044. In a specific manner, the CIF module 2024 may perform, for each speech frame of multiple speech frames included in the speech frame data, text activation value prediction on a speech representation vector corresponding to the speech frame; determine, according to a sum of text activation values of the speech frame and at least one speech frame before the speech frame, whether a current sum of the text activation values reaches the firing threshold; and if the firing threshold is reached, generate the firing vector from speech representation vectors corresponding to the text activation values within the range of the firing threshold, and transmit the firing vector to the speaker decoder.

Generally speaking, a speech character, such as speech " 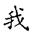 " may correspond to one or more speech frames, and a sentence, such as " 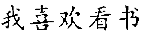 ", is formed by all speech frames corresponding to these five characters. Unlike traditional speech representation vector processing for each character, which needs to rely on speech frames of corresponding context characters, in the embodiments of the present application, parallel speech frame text activation value prediction will be performed on the speech representation vectors extracted by the speech recognition encoder 2022, and when the accumulated speech frame text activation values reach the firing threshold, the firing vector is generated. One firing vector corresponds to one character.

In the above process, a speech frame text activation value is used to represent the text content in a single speech frame, and a numerical range is [0, 1]. The speech frame text activation value is generally a floating-point number between 0 and 1, but may also be 0 or 1 in some cases. In addition, in the embodiments of the present application, the character may be of any speech or any type, for example, it may be a character in Chinese, or a word in English, or a number, etc. The firing threshold may be a value indicating that the activation values reach a certain degree to trigger generation of the firing vector. In order to improve the overall speed and efficiency of the solutions, and to facilitate processing, the firing threshold may generally be set to 1. However, without limitation, other thresholds set by those skilled in the art according to practical requirements may also be applied to the solutions of the embodiments of the present application.

In addition, it should be further noted that for multiple speech representation vectors corresponding to data of multiple speech frames, the CIF module 2024 may process them in parallel, that is, text activation values corresponding to the speech representation vectors may be obtained simultaneously. Taking the character " 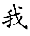 " corresponding to data of three speech frames as an example, for this character, the CIF module 2024 may process speech representation vectors corresponding to the data of the three speech frames in parallel, and simultaneously obtain text activation values corresponding to the three speech representation vectors, such as 0.3, 0.5 and 0.2, respectively. By analogy, taking " 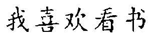 " as an example, assuming it corresponds to data of 20 speech frames, the CIF module 2024 may process speech representation vectors corresponding to the data of the 20 speech frames in parallel, and simultaneously obtain text activation values corresponding to the 20 speech representation vectors.

On this basis, the CIF module 2024 may perform transmission whenever the text activation values reach the firing threshold, or may perform transmission when there are multiple firing thresholds. Still taking the foregoing " 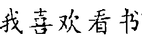 " as an example, which corresponds to data of 20 speech frames, and then assuming that corresponding speech frame text activation values are [0.3, 0.5, 0.2, 0.4, 0.6, 0.3, 0.4, 0.3, 0.7, 0.3, 0.5, 0.5], and the firing threshold is 1, then in one approach, when text activation values, such as (0.3, 0.5, 0.2) reach 1, a firing vector is generated based on three frames of speech representation vectors corresponding to " 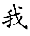 " and is transmitted to the speaker decoder 2044 in the speaker recognition branch unit 204. In another approach, transmissions are combined. For example, for (0.3, 0.5, 0.2), (0.4, 0.6), (0.3, 0.4, 0.3), (0.7, 0.3) and (0.5, 0.5), corresponding firing vectors are generated respectively, with a total of 5, and these 5 firing vectors are transmitted together to the speaker decoder 2044 in the speaker recognition branch unit 204. Moreover, since the text activation value corresponding to the speech representation vector of each frame of the speech frame data can be predicted in parallel, compared to traditional manners, the calculation efficiency can be greatly improved. On this basis, if the second approach mentioned above is adopted, the calculation speed and efficiency will be further improved. However, no matter which approach is adopted, both approaches are applicable to the solutions of the embodiments of the present application.

In addition, during a model training stage, the firing threshold may also serve as a basis for adjusting the text activation value. This is because in an initial stage of model training, a text activation value obtained by predicting may be inconsistent with an actual text activation value. For example, text activation values corresponding to " 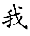 " in the initial stage are (0.1, 0.3, 0.1), and it can be seen that there is a deviation from the actual situation. To this end, scaling adjustment (for example, scaling-up or scaling-down adjustment, etc.) needs to be performed on the text activation values according to the actual number of texts included in the speech frame data, so that the number of firing vectors generated by predicting by the model at this stage is consistent with the actual number of texts. Exemplarily, assuming that a scaling coefficient is 2, text activation values corresponding to " 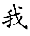 " after adjustment are (0.2, 0.6, 0.2), and thus, the firing vector corresponding to " 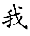 " may be generated. Further, through subsequent model training, the model can accurately predict text activation values without depending on the scaling coefficient (the scaling coefficient may also be considered to be 1). In a model inference or recognition stage, the firing threshold is typically a fixed value, such as 1, and there is no need to use the scaling coefficient (or the scaling coefficient may be considered to be 1). For example, for the speech frames 1-20 corresponding to " 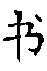 " mentioned above, the text activation values of the first three frames are 0.3, 0.5 and 0.2, respectively, which have accumulated to reach the threshold of 1, then one firing vector is generated to represent " 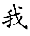 ". By analogy, five firing vectors may be generated based on the speech representation vectors of these 20 speech frames, and sequentially or simultaneously transmitted to the speaker decoder 2044 in the speaker recognition branch unit 204.

For the speaker recognition branch unit 204, the speaker encoder 2042 therein is configured to perform speaker feature extraction on the acoustic feature corresponding to the to-be-recognized speech frame data to obtain corresponding speaker representation vectors. A speaker feature is a feature that represents characteristics of a speaker, so as to distinguish different speakers, including but not limited to a voiceprint feature and the like. In the embodiments of the present application, through the speaker encoder 2042, speaker feature extraction is performed by means of encoding based on the acoustic feature of the speech frame data, so as to obtain the speaker representation vectors.

After receiving the firing vector transmitted by the CIF module 2024, the speaker decoder 2044 determines a speaker corresponding to the firing vector according to the firing vector and the speaker representation vectors. Since the firing vector includes the speech representation vectors corresponding to a relatively complete segment of speech, based on this, corresponding speaker recognition performed on the firing vector in combination with the speaker representation vectors can effectively improve the recognition efficiency. During specific speaker recognition, speaker recognition corresponding to the firing vector may be performed according to preset speaker sound feature vectors of one or more speakers, so as to determine the corresponding speaker.

Through the above-mentioned speaker encoder 2042 and the speaker decoder 2044, the speaker corresponding to the firing vector, that is, the speaker corresponding to the speech representation vectors within the range of the firing threshold, may be obtained. In a feasible manner, the speaker corresponding to each speech character represented by the speech representation vectors may be obtained. Based on this, through the speech recognition decoder 2026, the firing vector is then converted into the text, and a speaker corresponding to the text is determined according to information of the speaker corresponding to the firing vector.

Hereinafter, in conjunction with a speech recognition model for implementing functions of the above speech recognition apparatus, the above modules and their implemented functions are further described exemplarily.

In FIG. 2B, a model branch in the left-side dotted box is a model branch that implements corresponding functions of the speech recognition branch unit 202 in the above speech recognition apparatus, and a model branch in the right-side dotted box is a model branch that implements corresponding functions of the speaker recognition branch unit 204 in the above speech recognition apparatus.

In this example, the speech recognition encoder 2022 is implemented as AsrEncoder, the CIF module implements corresponding functions through a CIF model, and the speech recognition decoder 2026 is implemented as AsrDecoder. The speaker encoder 2042 is implemented as SpeakerEncoder, and the speaker decoder 2044 is divided into a decoding module and a speaker distance measurement module in this example. Specifically, the decoding module is implemented as SpeakerDecoder, and the speaker distance measurement module is implemented as Cosine Distance. In addition, in a feasible manner, as shown in FIG. 2B, the decoding module may be further divided into a first decoding module, implemented as SpeakerDecode layer1, and a second decoding module, implemented as SpeakerDecode layer2.

Based on the above structure, an input of the AsrEncoder is an acoustic feature corresponding to to-be-recognized speech frame data, and by modeling through a multi-layer neural network, deep speech representation vectors ***H^{asr}*** representing speech are obtained. Exemplarily, the AsrEncoder may be implemented as an encoder with any neural network structure, including but not limited to, an encoder adopting a Transformer structure, and other encoders.

Similarly, an input of the SpeakerEncoder is also the acoustic feature corresponding to the to-be-recognized speech frame data, and by modeling through a multi-layer neural network, deep speaker representation vectors ***H^{spk}*** representing a speaker is obtained. Exemplarily, the SpeakerEncoder may be implemented as an encoder with any neural network structure, including but not limited to, an encoder adopting a Transformer structure, and other encoders.

The CIF module may perform, for each speech frame of multiple speech frames included in the speech frame data, text activation value prediction on a speech representation vector corresponding to the speech frame; determine, according to a sum of text activation values of the speech frame and at least one speech frame before the speech frame, whether a current sum of the text activation values reaches the firing threshold; if the firing threshold is reached, generate the firing vector(s) from speech representation vectors corresponding to the text activation values within the range of the firing threshold, and transmit the firing vector(s) to the speaker decoder 2044. Specifically, in the model shown in FIG. 2B, based on the speech representation vectors ***H^{asr}*** outputted by the AsrEncoder, the CIF model further obtains, by calculation, a scalar (with a value ranging from 0 to 1) for each of the speech representation vectors ***H^{asr}***, i.e. a text activation value. The scalar may indicate a text content carried in the speech representation vector. When consecutive scalar values reach a threshold (i.e. the firing threshold), which is for example 1, scalars and corresponding speech vector representations are weighted to obtain a firing vector corresponding to a single character. The number of firing vectors obtained from a speech segment is equal to the number of characters included in that speech segment. In this example, a manner that multiple firing vectors corresponding to the speech segment form firing vectors ***Z^{cif}*** capable of being transmitted outwards is used. The CIF model may be implemented by using a structure such as a convolutional neural network. In an example, the CIF model may include at least one convolutional layer, at least one fully-connected layer, and one output layer that are sequentially connected. The speech representation vectors ***H^{asr}*** are taken as an input, and through the convolutional layer and the fully-connected layer, the scalars, that is, text information weights, may be obtained. Through the output layer, the firing vectors are generated based on the text information weight and transmitted to the SpeakerDecode layer1. But not limited to this, other model structures that can predict text activation values and generate firing vectors are also applicable to the solutions of the embodiments of the present application.

As mentioned above, in this example, the speaker decoder 2044 includes the decoding module and the speaker distance measurement module. The decoding module is configured to determine a sound feature corresponding to vectors of each character in the firing vectors according to the firing vectors and the speaker representation vectors, and the speaker distance measurement module determines a corresponding speaker for the sound feature corresponding to the vectors of each character according to a preset speaker sound feature vector. In a feasible manner, the decoding module determines the sound feature corresponding to the vectors of each character in the firing vectors according to the firing vectors, the speaker representation vectors and the speech representation vectors. Optionally, the decoding module may include the first decoding module and the second decoding module. The first decoding module may perform attention calculation according to the firing vectors, the speaker representation vectors and the speech representation vectors to obtain the sound feature corresponding to the vectors of each character in the firing vectors; and the second decoding module may detect whether it is required to correct the sound feature corresponding to the vectors of each character, and if so, perform correction, and send a corrected sound feature to the speaker distance measurement module.

Specifically in FIG. 2B, the SpeakerDecode layer1 will calculate the sound feature of the vectors corresponding to each speech character in the firing vectors ***Z^{cif}*** based on the speaker representation vectors ***H^{spk}*** outputted by the SpeakerEncoder, the speech representation vectors ***H^{asr}*** outputted by the AsrEncoder, and the firing vectors ***Z^{cif}*** outputted by the CIF. Exemplarily, attention calculation is performed by using the firing vectors ***Z^{cif}*** as a parameter Q in the attention calculation, using the speech representation vectors ***H^{asr}*** as a parameter K in the attention calculation, and using the speaker representation vectors ***H^{spk}*** as a parameter V in the attention calculation, to obtain the sound feature of the vectors corresponding to each speech character in the ***Z^{cif}***. Taking ***H^{asr}*** as a part of the calculation can make a calculation result more accurate. But not limited to this, the calculation may also be performed based only on ***Z^{cif}*** and ***H^{spk}***, and the sound feature of the vectors corresponding to each speech character in ***Z^{cif}*** may also be obtained. The sound feature may only represent the speaker corresponding to the vectors, but a specific identity of the speaker, whether the speaker is a target speaker, etc., still need to be determined and distinguished subsequently based on the pre-inputted speaker sound feature vector. In a feasible manner, the SpeakerDecode layer1 may be implemented as a decoder based on an attention mechanism, such as a decoder using a Transformer structure.

However, even with the combination of ***H^{spk}*, *Z^{cif}*** and ***H^{asr}***, there may still be cases where the sound feature is not accurate enough. For example, in some cases, the last character of a previous speaker is pronounced short, or an interval between the previous speaker and the following speaker is short, resulting in a speech feature corresponding to the character speech of the previous speaker being greatly different from other speech features of that speaker, or closer to a sound feature of the following speaker. Or, there is a case where speech of the previous speaker and the following speaker overlap, making it impossible to accurately represent a sound feature of an overlapping part, thus causing sound feature extraction to be less accurate. Therefore, in this example, the speaker decoder SpeakerDecode is divided into the SpeakerDecode layer1 and the SpeakerDecode layer2. The SpeakerDecode layer2 will perform detection based on the sound features ***H̅^{spk}*** outputted by the SpeakerDecode layer1 to determine whether the features need to be corrected. If necessary, the sound features *H̅^{spk}* are corrected, such as re-extracting features of these parts. Based on correction results, corrected sound features ***qₙ*** are outputted. It should be noted that through correction, more accurate sound features can be outputted. However, even if a result without correction may cause that a recognition result is less accurate than the result with the correction, since calculation is performed based on ***H^{spk}***, ***Z^{cif}*** and ***H^{asr}***, the result will be more accurate compared to traditional manners. And in some cases, the output result of the SpeakerDecode layer1 does not need to be corrected, that is, ***H̅^{spk}*** and ***qₙ*** are the same. Each speech character in ***qₙ*** corresponds to one sound feature. Optionally, an identifier may also be set for the sound feature corresponding to each speech character, so that the speaker corresponding to each character is marked more quickly subsequently. In a feasible manner, the SpeakerDecode layer2 may adopt the same structure as the SpeakerDecode layer1 or be implemented with a different structure. Exemplarily, the SpeakerDecode layer2 may be implemented as a decoder based on a self-attention mechanism SELF-ATTENTION mechanism.

Further, the output result ***qₙ*** of the SpeakerDecode layer2 may be inputted into the Cosine Distance part for similarity calculation with speaker sound feature vectors D that are pre-inputted into the model. In FIG. 2B, ***D* = *d*₁,. . . ,** ***d_{K}**,* that is, there are K speaker sound feature vectors Speaker embedding. These speaker sound feature vectors at least include sound feature vectors of some speakers in the to-be-recognized speech frame data. Based on this, through a distance metric, such as a cosine distance, a speaker sound feature vector that is closest to a current sound feature in terms of distance may be selected as a speaker corresponding to that sound feature, that is, the speaker corresponding to each speech character in the firing vectors.

After determining the speaker corresponding to each speech character, this information will be passed on to the AsrDecoder. In a feasible manner, the AsrDecoder may, on the one hand, convert the firing vectors outputted by the CIF, i.e. the speech representation vectors, into texts, and on the other hand, by combining the information of the speaker corresponding to each speech character, perform prediction to obtain a text output ***y***_{[1:*n*]} through multi-layer neural network modeling. The text output includes both a text sequence corresponding to the inputted speech frame data and the speaker corresponding to each character in the text sequence. However, in order to perform text prediction and output more accurately, in another feasible manner, the AsrDecoder combines the speech representation vectors ***H^{asr}*** outputted by the AsrEncoder on the basis of the firing vectors outputted by the CIF and the information of the speaker corresponding to each speech character to perform text sequence prediction. Exemplarily, the AsrEncoder performs attention calculation by using the firing vectors outputted by the CIF as a parameter Q of attention calculation, and using ***H^{asr}*** as parameters K and V of attention calculation to obtain the text sequence. Combined with the information of the speaker corresponding to each speech character, the speaker corresponding to each character in the text sequence is outputted.

Through the speech recognition apparatus of the embodiment, non-autoregressive end-to-end speech recognition related to the speaker is realized. On the one hand, the apparatus will generate the firing vector based on the speech representation vectors of a speech recognition task, and combines it with the speaker representation vectors of a speaker recognition task. In this way, task information interaction between the two in the feature generation stage is achieved, so that when speaker recognition is performed on speech, speech features and speaker features are effectively fused, thereby improving the accuracy of speech recognition and speaker marking. On the other hand, prediction of speech frame text activation values is parallel, that is, the speech representation vectors of multiple speech frames can be predicted simultaneously, and the firing vectors can be generated when the firing threshold is reached. Compared with a traditional manner in which context speech frames of a character corresponding to each speech frame need to be processed when processing the each speech frame, the processing speed and efficiency can be greatly improved. It can be seen that through the embodiment, the interaction complexity between the speech recognition task and the speaker recognition task is reduced, and the overall recognition efficiency is improved. Compared to a traditional end-to-end speech recognition system based on autoregression, the speech recognition apparatus and the model in this embodiment are simpler, and the computational efficiency is more efficient.

### Embodiment II

This embodiment describes, based on the apparatus and the model described in Embodiment I, a method for speech recognition by using the model.

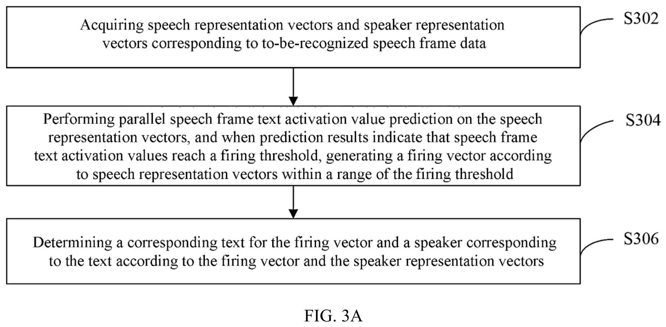

Referring to FIG. 3A, a flowchart of steps of a speech recognition method according to Embodiment II of the present application is shown.

The speech recognition method of this embodiment includes the following steps.

Step 302: acquiring speech representation vectors and speaker representation vectors corresponding to to-be-recognized speech frame data.

The to-be-recognized speech frame data is speech frame data including speech of at least one speaker. In this step, speech feature extraction and speaker feature extraction may be performed based on an acoustic feature of the speech frame data to obtain the corresponding speech representation vectors and the speaker representation vectors.

When using the speech recognition model shown in FIG. 2B, through the speech recognition encoder AsrEncoder and the speaker encoder SpeakerEncoder, based on the acoustic feature corresponding to the speech frame data, the speech recognition encoder AsrEncoder performs speech feature extraction on the acoustic feature corresponding to the to-be-recognized speech frame data to obtain the corresponding speech representation vectors, and the speaker encoder SpeakerEncoder performs speaker feature extraction on the acoustic feature corresponding to the to-be-recognized speech frame data to obtain the corresponding speaker representation vectors.

Step S304: performing parallel speech frame text activation value prediction on the speech representation vectors, and when prediction results indicate that speech frame text activation values reach a firing threshold, generating a firing vector according to speech representation vectors within a range of the firing threshold.

The speech representation vector corresponds to a speech frame, and each speech frame may have only a part of speech character and thus multiple speech frames form one speech character. Therefore, in this embodiment, speech frame text activation value prediction will be performed on the speech representation vector corresponding to each speech frame, so as to obtain information about the amount of text included in the speech representation vector, and the information is represented by the text activation value. Then, optionally, this step may be implemented as follows: for each speech frame of multiple speech frames included in the speech frame data, performing text activation value prediction on a speech representation vector corresponding to the speech frame; determining, according to a sum of text activation values of the speech frame and at least one speech frame before the speech frame, whether a current sum of the text activation values reaches the firing threshold; if the firing threshold is reached, generating the firing vector from speech representation vectors corresponding to the text activation values within the range of the firing threshold.

When the sum of the text activation values of multiple speech frames reaches the firing threshold, it indicates that a firing vector corresponding to a certain character may be generated for transmission. However, as mentioned above, it may also be that the firing vectors corresponding to all speech characters included in the speech frames are generated and then transmitted together.

When using the speech recognition model shown in FIG. 2B, through the CIF model, speech frame text activation value prediction may be performed on the speech representation vectors based on the speech representation vectors outputted by the speech recognition encoder, and when the prediction results indicate that the speech frame text activation values reach the firing threshold, the firing vector(s) may be generated according to the speech representation vectors within the range of the firing threshold. Further, the firing vector(s) is(are) transmitted to the speaker decoder.

Step S306: determining a corresponding text for the firing vector and a speaker corresponding to the text according to the firing vector and the speaker representation vectors.

According to the speaker representation vectors and combined with a pre-inputted speaker sound feature vector, a speaker may be determined for the vectors corresponding to each speech character in the firing vectors. That is, the corresponding texts for the firing vectors and the speaker corresponding to each character in the texts may be determined according to the firing vectors, the speaker representation vectors, the speech representation vectors and preset speaker sound feature vectors. Thus, speakers in different parts of the text can be distinguished more accurately.

In a feasible manner, the speaker may also be determined for the texts in combination with the speech representation vectors. That is, attention calculation may be performed according to the firing vectors, the speaker representation vectors and the speech representation vectors to obtain a sound feature corresponding to vectors of each character in the firing vectors; a corresponding speaker may be determined for the sound feature corresponding to the vectors of each character according to the preset speaker sound feature vector; and each character text and a speaker corresponding to each character text may be determined according to the vectors of each character and the speaker corresponding to the vectors. By combining the speech representation vectors for attention calculation, when speech expression is combined into speaker recognition, the speaker determined for each character vector can be more accurate.

However, in some cases, there may be a certain error in the result outputted by the CIF. Therefore, in a feasible manner, before determining the corresponding speaker for the sound feature corresponding to the vectors of each character according to the preset speaker sound feature vector, whether it is required to correct the sound feature corresponding to the vectors of each character may also be detected, and if so, correction is performed. Then, determining the corresponding speaker for the sound feature corresponding to the vectors of each character according to the preset speaker sound feature vector may be implemented as: determining the corresponding speaker for a corrected sound feature corresponding to the vectors of each character according to the preset speaker sound feature vector. Therefore, if the CIF output result is accurate, no correction is required, and if there is a certain deviation, the CIF output result can be corrected accurately in time. On this basis, more accurate results can be obtained when subsequent speaker determination is performed.

When using the speech recognition model shown in FIG. 2B, the speaker may be determined for each character in the firing vectors according to the firing vectors and the speaker representation vectors through the speaker decoder. When there is character vector correction, attention calculation may be performed on the firing vectors, the speaker representation vectors and the speech representation vectors through the first decoding module, such as SpeakerDecode layer1, in the speaker decoder, to obtain the sound feature corresponding to the vectors of each character in the firing vectors. Further, through the second decoding module, such as SpeakerDecode layer2, whether it is required to correct the sound feature corresponding to the vectors of each character is detected; and if so, correction is performed, and then the corrected sound feature is sent to the speaker distance measurement module, such as Cosine Distance module, in the speaker decoder to determine the corresponding speaker for the corrected sound feature corresponding to each character vector.

On the other hand, the corresponding texts may be determined for the firing vectors according to the firing vectors and the speech representation vectors. In combination with the speaker corresponding to each character vector in the firing vectors, the corresponding speaker may be determined for each text character in the texts.

In order to make the conversion from speech to text more accurate, in a feasible manner, attention calculation may be performed on the firing vectors and the speech representation vectors when determining the corresponding texts for the firing vectors according to the firing vectors and the speech representation vectors, and the corresponding texts for the firing vectors may be determined according to an attention calculation result.

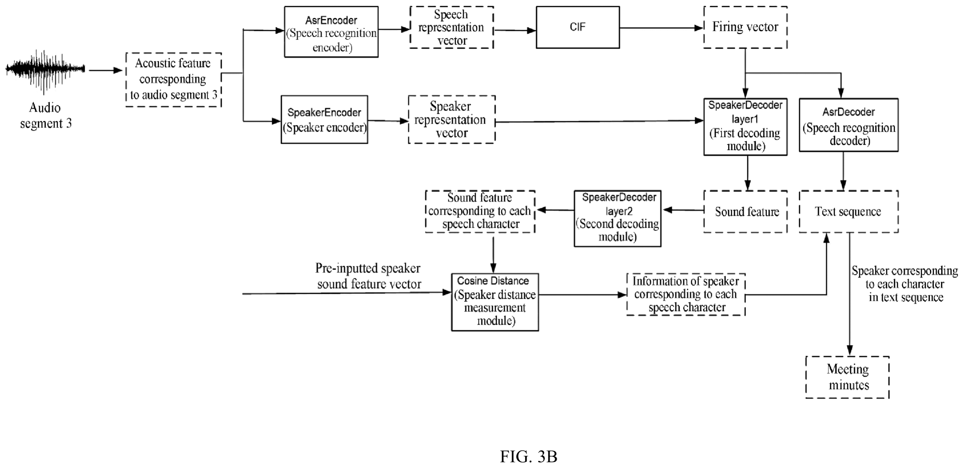

Taking a conference scenario as an example, the above process is exemplarily illustrated, as shown in FIG. 3B.

It is assumed that a conference audio related to a conference is 5 minutes in total, and the conference audio involves speakers A and B. First, the 5-minute conference audio is captured as multiple segments according to a certain capturing length. In this example, assuming that one segment is 60 seconds, the conference audio is divided into five segments, which are represented as audio segments 1, 2, 3, 4 and 5. Then it is assumed that the audio segment 3 contains speeches of both speakers A and B. Based on the model shown in FIG. 2B, a speech recognition process for the audio segment 3 is as follows.
(1) Performing acoustic feature extraction on the audio segment 3 to obtain acoustic features corresponding to the audio segment 3.
   The audio segment 3 includes multiple speech frames. Assuming that 20 speech frames are included, the 20 speech frames form speech frame data corresponding to the audio segment 3, and the acoustic features corresponding to the audio segment 3 are also acoustic features corresponding to data of the 20 speech frames.
(2) Inputting the acoustic features corresponding to the data of the 20 speech frames into the speech recognition model (as shown in FIG. 2B), extracting speech features through the AsrEncoder (speech recognition encoder) to obtain speech representation vectors, and extracting speaker features through the Speaker Encoder (speaker encoder) to obtain speaker representation vectors.
(3) Performing, based on the speech representation vectors, text activation value prediction on each speech frame corresponding to the speech representation vectors through the CIF.
   It is assumed that a conversation in the audio segment 3 is " 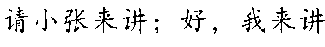 ". Then it is assumed that based on the speech representation vectors, text activation value prediction is performed on each speech frame, and prediction results, i.e., text activation values are respectively [0.4, 0.6, 0.3, 0.4, 0.3, 0.7, 0.3, 0.5, 0.5, 0.3, 0.7, 0.2, 0.8, 0.5, 0.5, 0.2, 0.8, 0.4, 0.4, 0.2]. In this example, the firing threshold is set to 1, and every time a sum of text activation values reaches 1, it is considered that corresponding speech frames and their corresponding speech representation vectors correspond to one speech character. For example, [0.4, 0.6] indicates that the first and second speech frames and their speech representation vectors correspond to a speech character " 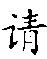 ". By analogy, speech representation vectors corresponding to each speech character may be determined. Correspondingly, a text activation value corresponding to each speech representation vector is also determined.
(4) Determining whether speech frame text activation values reach a firing threshold through the CIF, and if so, generating a firing vector.
   In this example, " 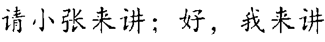 " includes 9 text characters, and then calculation is performed on the abovementioned text activation values. For example, in [0.4, 0.6, 0.3, 0.4, 0.3, 0.7, 0.3, 0.5, 0.5, 0.3, 0.7, 0.2, 0.8, 0.5, 0.5, 0.2, 0.8, 0.4, 0.4, 0.2], the sum results with the text activation values reaching the firing threshold (1 in this example), i.e., (0.4, 0.6), (0.3, 0.4, 0.3), (0.7, 0.3), (0.5, 0.5), (0.3, 0.7), (0.2, 0.8), (0.5, 0.5), (0.2, 0.8), (0.4, 0.4, 0.2), are calculated and obtained sequentially. Based on this, the firing vector may be generated based on speech representation vectors corresponding to each group of the text activation values that reach the firing threshold. In this example, there are a total of 9 groups, that is, 9 firing vectors will be generated. In this example, it is set that the 9 firing vectors are transmitted together.
(5) Transmitting the firing vector to the SpeakerDecoder layer1 (first decoding module) through the CIF.
(6) Through the SpeakerDecoder layer1, determining a corresponding sound feature for speech representation vectors corresponding to each speech character based on the speaker representation vectors, the firing vector, and the speech representation vectors.
   For example, according to vectors corresponding to the first speech frame and the second speech frame in the firing vector, a sound feature corresponding to the character "it" is determined. According to vectors corresponding to the third, fourth, and fifth speech frames, a sound feature corresponding to the character " 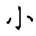 " is determined. By analogy, a sound feature corresponding to each speech character in " 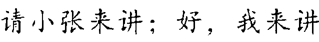 " is obtained.
(7) Through the SpeakerDecoder layer2 (second decoding module), detecting whether the sound feature outputted by the SpeakerDecoder layer1 needs to be corrected; if so, performing correction (such as performing generation again or performing correction through a preset correction algorithm), and if not, outputting it directly.
   In this example, it is set that no correction is required, and the SpeakerDecoder layer2 outputs a sound feature corresponding to each speech character in " 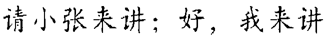 ".
(8) Through the Cosine Distance (speaker distance measurement module) part, determining a speaker for the sound feature corresponding to each speech character based on a pre-inputted speaker sound feature vector.
   In this example, it is assumed that the determined speaker information is as follows: " 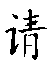 " - Speaker A; " 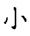 " - Speaker A; " 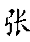 "- Speaker A; " 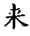 " - Speaker A; " 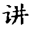 " - Speaker A; " 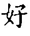 "- Speaker B; " 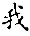 "- Speaker B; " 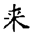 "- Speaker B; " 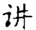 "- Speaker B.
(9) Through the AsrDecoder (speech recognition decoder), based on the firing vector outputted by the CIF, the speech representation vectors outputted by the AsrEncoder, and the obtained information of the speaker corresponding to each speech character, outputting a text sequence corresponding to the audio segment 3 and a speaker corresponding to each character in the text sequence.
(10) Generating meeting minutes based on the text sequence and the speaker corresponding to each character in the text sequence.

Through the above process, speech recognition and speaker marking for the recognized text can be performed efficiently and accurately.

From the above, through this embodiment, in the scenario where speech recognition and marking of corresponding speakers are required, on the one hand, the firing vector will be generated based on the speech representation vectors of a speech recognition task, and combined with the speaker representation vectors of a speaker recognition task. In this way, task information interaction between the two in the feature generation stage is achieved, so that when performing speaker recognition on speech, speech features and speaker features are effectively fused, thereby improving the accuracy of speech recognition and speaker marking. On the other hand, in the solution of this embodiment, the prediction of speech frame text activation values is parallel, that is, the speech representation vectors of multiple speech frames can be predicted simultaneously, and the firing vectors are generated when the firing threshold is reached. Compared with the traditional manner in which context speech frames of a character corresponding to each speech frame need to be processed when processing the each speech frame, the processing speed and efficiency can be greatly improved. It can be seen that through this embodiment, the interaction complexity between the speech recognition task and the speaker recognition task is reduced, and the overall recognition efficiency is improved.

In addition, in this embodiment, the implementation of some steps is described briefly, and those skilled in the art can refer to the relevant parts in Embodiment I for implementation.

### Embodiment III

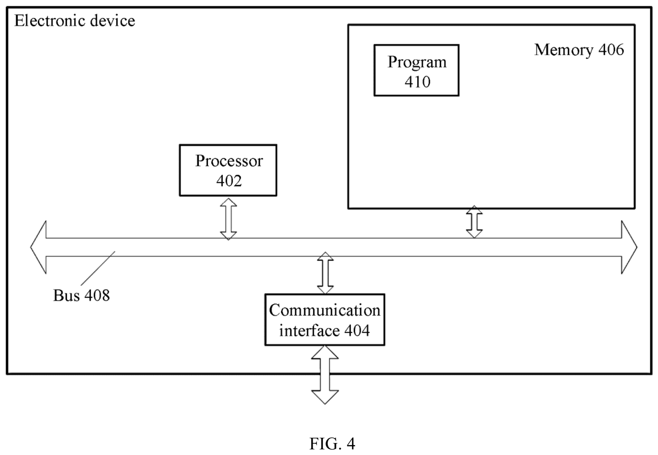

Referring to FIG. 4, a schematic structural diagram of an electronic device according to Embodiment III of the present application is shown. The specific implementation of the electronic device is not limited by the specific embodiments of the present application.

As shown in FIG. 4, the electronic device may include: a processor (processor) 402, a communication interface (Communications Interface) 404, a memory (memory) 406, and a communication bus 408.

The processor 402, the communication interface 404 and the memory 406 communicate with each other through the communication bus 408.

The communication interface 404 is configured to communication with other electronic devices or servers.

The processor 402 is configured to execute a program 410, and specifically may execute the relevant steps in the above speech recognition method embodiments.

Specifically, the program 410 may include program code, and the program code includes computer operation instructions.

The processor 402 may be a CPU, an application specific integrated circuit ASIC (Application Specific Integrated Circuit), or one or more integrated circuits configured to implement the embodiments of the present application. One or more processors included in a smart device may be processors of the same type, such as one or more CPUs, and may also be different types of processors, such as one or more CPUs and one or more ASICs.

The memory 406 is configured to store the program 410. The memory 406 may include a high-speed RAM storage, and may further include a non-volatile memory (non-volatile memory), such as at least one disk storage.

The program 410 may be specifically configured to cause the processor 402 to perform the operations corresponding to the speech recognition methods described in the aforementioned method embodiments.

The specific implementation of each step in the program 410 can be found in the corresponding description of steps and units in the above method embodiments, and has corresponding beneficial effects, which will not be repeated here. Those skilled in the art can clearly understand that, for the convenience and conciseness of the description, the specific working processes of the devices and modules described above can be found in the corresponding process description in the aforementioned method embodiments, which will not be repeated here.

An embodiment of the present application further provides a computer program product including computer instructions, and the computer instructions instruct a computing device to perform operations corresponding to any of the speech recognition methods in the above-described plurality of method embodiments.

It should be noted that that according to implementation requirements, the various components/steps described in the embodiments of the present application may be divided into more components/steps, or two or more components/steps or partial operations of components/steps may be combined into a new component/step, so as to achieve the purpose of the embodiments of the present application.

The methods in the embodiments of the present application may be implemented in hardware, firmware, or implemented as software or computer code that may be stored on a recording medium (such as a compact disc read-only memory (Compact Disc Read-Only Memory, CD-ROM), a random access memory (Random Access Memory, RAM), a floppy disk, a hard disk, or a magneto-optical disk), or implemented as computer code that is originally stored on a remote recording medium or a non-temporary machine-readable medium and downloaded through a network and that is to be stored on a local recording medium. Therefore, the methods described herein may be processed by such software stored on the recording medium that uses a general-purpose computer, a special-purpose processor, or a programmable or dedicated hardware (such as an application specific integrated circuit (Application Specific Integrated Circuit, ASIC) or a field programmable gate array (Field Programmable Gate Array, FPGA)). It can be understood that the computer, processor, microprocessor controller, or programmable hardware includes a storage component (such as a random access memory (Random Access Memory, RAM), a read-only memory (Read-Only Memory, ROM), a flash memory, etc.) that may store or receive software or computer code, and when the software or computer code is accessed and executed by the computer, processor, or hardware, the methods described herein are implemented. In addition, when the general-purpose computer accesses the code used to implement the methods shown herein, the execution of the code transforms the general-purpose computer into a special-purpose computer used to execute the methods shown herein.

Those of ordinary skill in the art can realize that the described units and method steps of examples in the embodiments disclosed herein may be implemented through electronic hardware, or a combination of computer software and electronic hardware. Whether these functions are executed in hardware or software depends on the specific application and design constraint conditions of the technical solutions. A person skilled in the art may use a different method to achieve the described functions for each specific application, but such implementation should not be considered beyond the scope of the embodiments of the present application.

The above embodiments are only used to illustrate the embodiments of the present application and are not intended to limit the embodiments of the present application. Those of ordinary skill in the relevant technical field may make various changes and modifications without departing from the spirit and scope of the embodiments of the present application. Therefore, all equivalent technical solutions also belong to the scope of the embodiments of the present application, and the patent protection scope of the embodiments of the present application should be limited by the claims.

## Claims

1. A speech recognition method, comprising:
acquiring speech representation vectors and speaker representation vectors corresponding to to-be-recognized speech frame data;
performing parallel speech frame text activation value prediction on the speech representation vectors, and when prediction results indicate that speech frame text activation values reach a firing threshold, generating a firing vector according to speech representation vectors within a range of the firing threshold;
determining a corresponding text for the firing vector and a speaker corresponding to the text according to the firing vector and the speaker representation vectors.

2. The method according to claim 1, wherein the performing the parallel speech frame text activation value prediction on the speech representation vectors, and when the prediction results indicate that the speech frame text activation values reach the firing threshold, generating the firing vector according to the speech representation vectors within the range of the firing threshold comprises:
for each speech frame of multiple speech frames comprised in the speech frame data, performing text activation value prediction on a speech representation vector corresponding to the speech frame;
determining, according to a sum of text activation values of the speech frame and at least one speech frame before the speech frame, whether a current sum of the text activation values reaches the firing threshold;
if the firing threshold is reached, generating the firing vector from speech representation vectors corresponding to the text activation values within the range of the firing threshold.

3. The method according to claim 1 or 2, wherein the determining the corresponding text for the firing vector and the speaker corresponding to the text according to the firing vector and the speaker representation vectors comprises:
determining the corresponding text for the firing vector and a speaker corresponding to each character in the text according to the firing vector, the speaker representation vectors, the speech representation vectors and a preset speaker sound feature vector.

4. The method according to claim 3, wherein the determining the corresponding text for the firing vector and the speaker corresponding to each character in the text according to the firing vector, the speaker representation vectors, the speech representation vectors and the preset speaker sound feature vector comprises:
performing attention calculation according to the firing vector, the speaker representation vectors and the speech representation vectors to obtain a sound feature corresponding to vectors of each character in the firing vector;
determining a corresponding speaker for the sound feature corresponding to the vectors of each character according to the preset speaker sound feature vector;
determining each character text and a speaker corresponding to each character text according to the vectors of each character and the speaker corresponding to the vectors.

5. The method according to claim 4, wherein,
before determining the corresponding speaker for the sound feature corresponding to the vectors of each character according to the preset speaker sound feature vector, the method further comprises: detecting whether it is required to correct the sound feature corresponding to the vectors of each character, and if so, performing correction;
the determining the corresponding speaker for the sound feature corresponding to the vectors of each character according to the preset speaker sound feature vector comprises: determining a corresponding speaker for a corrected sound feature corresponding to the vectors of each character according to the preset speaker sound feature vector.

6. The method according to claim 1 or 2, wherein the determining the corresponding text for the firing vector comprises:
determining the corresponding text for the firing vector according to the firing vector and the speech representation vectors.

7. The method according to claim 6, wherein the determining the corresponding text for the firing vector according to the firing vector and the speech representation vectors comprises:
performing attention calculation on the firing vector and the speech representation vectors;
determining the corresponding text for the firing vector according to an attention calculation result.

8. The method according to claim 1, wherein the speech recognition method is performed through a speech recognition model;
the speech recognition model includes a speech recognition branch and a speaker recognition branch, wherein the speech recognition branch comprises: a speech recognition encoder, a continuous integrate-and-fire layer and a speech recognition decoder; the speaker recognition branch includes a speaker encoder and a speaker decoder;
the speech recognition encoder is configured to perform speech feature extraction on an acoustic feature corresponding to the to-be-recognized speech frame data to obtain the corresponding speech representation vectors;
the continuous integrate-and-fire layer is configured to: perform the parallel speech frame text activation value prediction on the speech representation vectors, and when the prediction results indicate that the speech frame text activation values reach the firing threshold, generate the firing vector according to the speech representation vectors within the range of the firing threshold and transmit the firing vector to the speaker decoder;
the speaker encoder is configured to perform speaker feature extraction on the acoustic feature corresponding to the to-be-recognized speech frame data to obtain the corresponding speaker representation vectors;
the speaker decoder is configured to receive the firing vector and determine a speaker corresponding to the firing vector according to the firing vector and the speaker representation vectors;
the speech recognition decoder is configured to convert the firing vector into the text and determine the speaker corresponding to the text according to information of the speaker corresponding to the firing vector.

9. A speech recognition apparatus, comprising: a speech recognition branch unit and a speaker recognition branch unit, wherein the speech recognition branch unit comprises: a speech recognition encoder, a continuous integrate-and-fire module and a speech recognition decoder; the speaker recognition branch unit comprises: a speaker encoder and a speaker decoder;
the speech recognition encoder is configured to perform speech feature extraction on an acoustic feature corresponding to to-be-recognized speech frame data to obtain corresponding speech representation vectors;
the continuous integrate-and-fire module is configured to: perform parallel speech frame text activation value prediction on the speech representation vectors, and when prediction results indicate that speech frame text activation values reach a firing threshold, generate a firing vector according to speech representation vectors within a range of the firing threshold and transmit the firing vector to the speaker decoder;
the speaker encoder is configured to perform speaker feature extraction on the acoustic feature corresponding to the to-be-recognized speech frame data to obtain corresponding speaker representation vectors;
the speaker decoder is configured to receive the firing vector and determine a speaker corresponding to the firing vector according to the firing vector and the speaker representation vectors;
the speech recognition decoder is configured to convert the firing vector into a text and determine a speaker corresponding to the text according to information of the speaker corresponding to the firing vector.

10. The apparatus according to claim 9, wherein the continuous integrate-and-fire module is configured to: for each speech frame of multiple speech frames comprised in the speech frame data, perform text activation value prediction on a speech representation vector corresponding to the speech frame; determine, according to a sum of text activation values of the speech frame and at least one speech frame before the speech frame, whether a current sum of the text activation values reaches the firing threshold; if the firing threshold is reached, generate the firing vector from speech representation vectors corresponding to the text activation values within the range of the firing threshold, and transmit the firing vector to the speaker decoder.

11. The apparatus according to claim 9 or 10, wherein the speaker decoder comprises a decoding module and a speaker distance measurement module;
the decoding module is configured to determine a sound feature corresponding to vectors of each character in the firing vector according to the firing vector and the speaker representation vectors;
the speaker distance measurement module is configured to determine a corresponding speaker for the sound feature corresponding to the vectors of each character according to a preset speaker sound feature vector.

12. The apparatus according to claim 11, wherein the decoding module is configured to determine the sound feature corresponding to the vectors of each character in the firing vector according to the firing vector, the speaker representation vectors and the speech representation vectors.

13. The apparatus according to claim 12, wherein the decoding module comprises a first decoding module and a second decoding module;
the first decoding module is configured to perform attention calculation according to the firing vector, the speaker representation vectors and the speech representation vectors to obtain the sound feature corresponding to the vectors of each character in the firing vector;
the second decoding module is configured to detect whether it is required to correct the sound feature corresponding to the vectors of each character, and if so, perform correction, and send a corrected sound feature to the speaker distance measurement module.

14. An electronic device comprising: a processor, a memory, a communication interface and a communication bus, wherein the processor, the memory and the communication interface communicate with each other through the communication bus;
the memory is configured to store at least one executable instruction, and the executable instruction causes the processor to perform operations corresponding to the method according to any one of claims 1 to 8.
